# EUROPEAN PATENT SPECIFICATION

(11) **EP 2 575 145 B1**
(45) Date of publication and mention of the grant of the patent: **26.07.2017**
(21) Application number: 12181005.5
(22) Date of filing: 20.08.2012
(51) Int. Cl.: H01B 3/40, C09D 5/00, C09D 163/00, B29C 39/12

(54) **Electrical insulating cast article and manufacturing method thereof**
Elektrisch isolierender Gussgegenstand und Herstellungsverfahren davon
Article coulé d'isolation électrique et son procédé de fabrication

(30) Priority: 29.09.2011 JP 2011215722
(43) Date of publication of application: 03.04.2013
(73) Proprietor: Kabushiki Kaisha Toshiba, Tokyo 105-8001 (JP)
(72) Inventor: Nakano, Toshiyuki, Tokyo, 105-8001 (JP); Hirata, Daisuke, Tokyo, 105-8001 (JP); Takei, Masafumi, Tokyo, 105-8001 (JP); Shiiki, Motoharu, Tokyo, 105-8001 (JP); Onoda, Hiroko, Tokyo, 105-8001 (JP)
(74) Representative: Hoffmann Eitle

(56) References cited:
- DATABASE WPI Week 200703 Thomson Scientific, London, GB; AN 2007-021319 XP002692018, & JP 2006 310205 A (MITSUBISHI ELECTRIC CORP) 9 November 2006 (2006-11-09)
- DATABASE WPI Week 201045 Thomson Scientific, London, GB; AN 2010-H08721 XP002692019, & JP 2010 138280 A (MITSUBISHI ELECTRIC CORP) 24 June 2010 (2010-06-24)
- DATABASE WPI Week 200738 Thomson Scientific, London, GB; AN 2007-400058 XP002692020, & JP 2007 077358 A (MITSUBISHI ELECTRIC CORP) 29 March 2007 (2007-03-29)

## Description

### FIELD

Embodiments described herein relate generally to an electrical insulating cast article including metal parts and an insulating resin material, and a manufacturing method of the electrical insulating cast article.

### BACKGROUND

In general, in an electric equipment used for a high-capacity power transmission equipment and so on, a metal part being a conductor is supported by a resin such as an epoxy resin being an insulator. In this case, the metal part is cast inside the resin to surely make the metal part adhere to the resin.

The above-stated electric equipment generates heat inside thereof by energizing, and therefore, it is usual to be used at a temperature state of a room temperature or more. In addition, it is often the case that the electric equipment is used under a state of the room temperature or more because heat resulting from direct sunlight and so on at a summertime and a daytime enters from outside depending on an installation state at indoor, outdoor, or the like. When the temperature state is the room temperature or more, a stress caused by a difference in both thermal expansion coefficients is generated at an interface between the metal part and a cast resin for embedding, and therefore, an adhesive force at the interface weakens and peeling off is easy to occur in the electric equipment being the cast article.

Various methods are known to suppress that the adhesiveness at the interface weakens and the peeling off occurs. Specifically, a method is known in which an aluminum alloy being the metal part and an epoxy resin being the cast resin are integrated via a primer layer. In this method, the primer layer is provided by, for example, a compound of a bisphenol-type epoxy resin, a polyvinyl butyral and a phenol resin is diluted by aceton and alcohol.

Besides, a method in which a surface of the metal part is roughened by means of a sand blast, and a method in which a firm oxide film is formed at the surface of the metal part by chemical and electrochemical methods such as a conversion treatment, an acid etching process, a boehmite process, an anodic oxidation process, are known as a preprocess of a casting operation to enhance the adhesive force between the metal part and the cast resin.

In particular, an FPL etching method is a method forming an ultrathin oxide film layer of approximately several dozen nm at a surface of the aluminum alloy being the metal part by etching in sulfuric acid/dichromic acid solution. The FPL etching method is known as a representative method enhancing the adhesive force between the epoxy resin being the cast resin and the metal part, and it is employed as a standard such as JIS K 6848, ASTM D 2651.

Further, a phosphoric acid anodic oxidation technology is known as a preprocessing method having durability under a high temperature and humidity environment than the FPL etching method. This phosphoric acid anodic oxidation technology is a technology adhering between the aluminum alloys with each other in which a phosphoric acid anodic oxide film layer is each formed at a surface thereof, between the aluminum alloy in which an anodic oxide film layer is formed at the surface thereof and a different kind of metal, or between the aluminum alloy in which an anodic oxide film layer is formed at the surface thereof and a composite material via a film state adhesive layer.

However, an adhesive using the bisphenol-type epoxy resin (primer) has a low glass transition temperature of its own and low heat resistance, and therefore, it is difficult to secure the adhesive force at the interface between the metal part and the cast epoxy resin especially at a high temperature state.

Besides, in recent years, a requirement to reduce usage of environment-affecting substance is becoming high, and a development of an adhesive preprocessing technology of a surface of the metal part without using chromium is expected.

On the other hand, it is necessary in the above-stated phosphoric acid anodic oxidation technology that the aluminum alloy after the anodic oxidation process is water-washed, heat and dry processed, and thereafter, is coated with the primer within three days and retained to secure enough adhesive strength. In addition, it is said that there is a limit of within ten days at the longest in a retention period from the time when the aluminum alloy is once primer processed until it is transferred to the adhesive process though it is different depending on kinds of the primer. The limitation of a series of retention period after the phosphoric acid anodic process hampers when a manufacturing process is managed, and is a factor obstructing productivity.

Further, it is known that cracks occur at around 110°C at the oxide film formed on the surface of the aluminum alloy parts by the anodic oxidation because there is a difference in the thermal expansion coefficients with the base material of the aluminum alloy, and a thermal stress is thereby generated. A secondary curing temperature at 130°C or more is necessary at the minimum in a cast operation. Accordingly, the adhesive preprocessing technology in which the adhesive force between the anodic oxide film formed on the surface of the aluminum alloy and the cast resin does not deteriorate is expected.

JP 2006 310205 A relates to a cast article for an electric apparatus molded by embedding a metal component formed of aluminum in an epoxy resin, wherein a chromate coating is arranged on a surface of the metal component in contact with the epoxy resin, and a primer is arranged between the metal component with the chromate coating arranged on a surface thereof and the epoxy resin.

JP 2010 138280 A relates to a primer composition containing a modified bisphenol type epoxy resin having a flexible skeleton, a bisphenol type epoxy resin having no flexible skeleton, and a mixed solvent of toluene and methyl ethyl ketone, wherein the modified bisphenol type epoxy resin is contained in an amount of 5-80 wt. % relative to the total amount of the epoxy resins contained in the primer composition.

JP 2007 077358 A relates to a primer composition comprising a polyfunctional epoxy resin, a bisphenol type epoxy resin, imidazole and a mixed solvent of toluene and methyl ethyl ketone, the amount of the bisphenol type epoxy resin being 80-120 parts wt. based on 100 parts wt. of the polyfunctional epoxy resin, the amount of the imidazole being 1-10 parts wt. based on 100 parts wt. of the polyfunctional epoxy resin and the amount of the mixed solvent of toluene and methyl ethyl ketone being >60 wt.% and < 99.5 wt.% based on the primer composition.

A problem to be solved by the present invention is to provide an electrical insulating cast article including an adhesive interface with a high-temperature creep property excellent for a long time without deteriorating the adhesive force even if the cast operation is performed after it is retained for a long time after the anodic oxidation process, and a manufacturing method of the electrical insulating cast article including the adhesive interface as stated above.

An electrical insulating cast article according to the embodiment includes: a base material formed by an aluminum alloy or pure aluminum; a cast resin; an anodic oxide film formed at a surface of the base material; and an adhesive provided between the base material and the cast resin and making the surface where the anodic oxide film is formed adhere to the cast resin at the base material, wherein the adhesive is made up of a main ingredient composed of an epoxy compound having at least two or more epoxy groups in one molecule, and a curing agent having a resole-type phenol resin added to the main ingredient, and the main ingredient is at least one kind among a bifunctional bisphenol-type epoxy resin, a bifunctional biphenyl-type epoxy resin or a bifunctional naphthalene-type epoxy resin.

The anodic oxide film is made up of plural prismatic cells. A hole extending in a depth direction and opening at a surface of the prismatic cell is formed approximately in a vicinity of a center of the prismatic cell, and branch holes extending in approximately a vertical direction relative to an inner peripheral surface are further formed at the inner peripheral surface of the hole. A thickness of the anodic oxide film is thicker than 0.5 µm and less than 2.0 µm. The adhesive is filled into each hole of the prismatic cell and of which thickness is 1 or more and 40 µm or less.

### BRIEF DESCRIPTION OF THE DRAWINGS

FIG. 1 is a schematic view illustrating a cross-sectional structure of an anodic oxide film formed on a surface of an aluminum alloy in an anodic oxidation aluminum alloy member according to a first and a second embodiment.
FIG. 2A, FIG. 2B, FIG. 2C and FIG. 2D are sectional views sequentially illustrating manufacturing and so on of the anodic oxide film in the first and second embodiments, and schematically illustrating a cross-sectional structure of the surface of the aluminum alloy member until a process of an epoxy casting.
FIG. 3 is a sectional view illustrating a shape of a test piece used for a tensile strength measurement in the first and second embodiments and comparative examples.
FIG. 4 is a view illustrating high-temperature creep test results at an adhesive portion between an aluminum part and a casting epoxy resin in the first embodiment.
FIG. 5 is a schematic view illustrating a masking fixture so that the anodic oxide film is not formed at the surface of the aluminum alloy member in a third embodiment.

### DETAILED DESCRIPTION

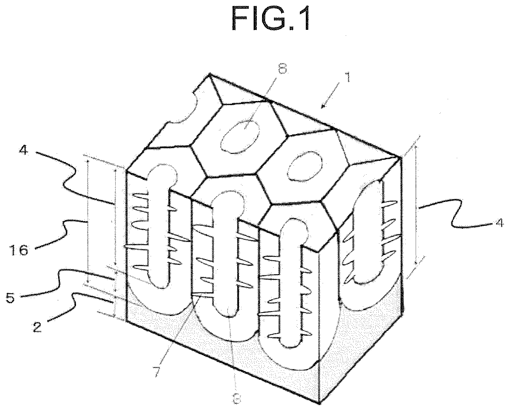

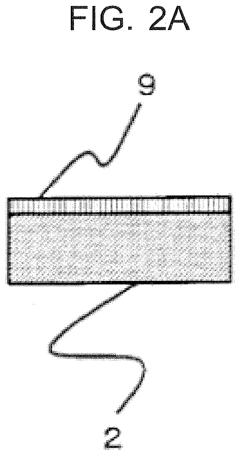

Hereinafter, embodiments according to the present invention are described with reference to FIG. 1 and FIG. 2A to FIG. 2D.

FIG. 1 is a schematic view illustrating a cross-sectional structure of an anodic oxide film formed by an embodiment of the present invention. As illustrated in FIG. 1, an anodic oxide film 16 is made up of plural prismatic cells 8. The plural prismatic cells 8 are each approximately a hexagonal prism state having a minute hole 3, and they are formed adjacently with each other on a base material 2 being an aluminum alloy member.

In detail, a portion of which mechanical strength is high called as a barrier layer 5 is formed at the base material 2 such as the aluminum alloy and a bottom portion of the prismatic cell 8, in one prismatic cell 8. The prismatic cell 8 extends from the barrier layer 5 toward upward (an upward of a surface of the base material 2). The minute hole 3 is formed approximately in a vicinity of a center of the prismatic cell 8. The minute hole 3 opens at an upper surface of the prismatic cell 8 while setting the barrier layer 5 as a bottom portion, namely, at a surface of the anodic oxide film 16. Further, branch minute holes 7 are formed at a side surface (minute hole inner peripheral surface) of a porous portion 4 heading from the bottom portion toward the opening portion at an upper portion of the minute hole 3 in approximately a vertical direction relative to a surface direction of the base material 2, namely, an axial direction (depth direction) of the minute hole 3.

A length of the prismatic cell 8, namely, a thickness of the anodic oxide film 16, presence/absence of the branch minute holes 7, and a diameter of the minute hole 3 are formed as desired by a method of an anodic oxidation process described in the following.

Materials such as so-called pure aluminum material not an alloy, a JIS1000 series alloy being a pure aluminum series, a JIS6000 series alloy being an Al-Mg-Si series, and a JIS7000 series alloy being an Al-Zn-Mg series can be used as the base material 2, and it is not particularly limited as long as it is the pure aluminum and the aluminum alloy. Besides, a material in which a heat treatment such as a solution heat treatment and an aging treatment is performed to these alloys can be used, and a cladding material of these aluminum alloys can also be used.

Hereinafter, materials and process methods necessary for manufacturing and so on of the anodic oxide film are sequentially described by using FIG. 2A to FIG. 2D.

At first, as illustrated in FIG. 2A, for example, the base material 2 of the aluminum alloy is prepared. An oxide film 9 of which mechanical strength is small is formed at a surface of the base material 2 being the aluminum alloy. Accordingly, an uneven oxide film 9 formed at the surface of the base material 2 is removed before the anodic oxidation process is performed. For example, after washing the base material 2 with a degreasing liquid, alkaline etching is performed in a sodium hydroxide (caustic soda) solution, a desmutting treatment is performed in a nitric acid solution or the nitric acid solution containing nitric acid and hydrofluoric acid to thereby perform a preprocessing. The oxide film layer 9 is removed by performing the above-stated preprocessing, and thereby, the anodic oxidation process is performed evenly, and the adhesive force with the epoxy resin being the cast resin can be improved. Note that the preprocessing is not limited to the above-stated method.

After the above-state preprocessing, a surface concave and convex process such as a sand blast process may be performed for a surface which is in contact with the epoxy resin being the cast resin at the base material 2. The surface is roughened by the sand blast process, and thereby, the minute holes 3 by the anodic oxidation process are formed in random directions, and an anchoring effect (adhesive force) for the epoxy resin can be increased. Further, the anodic oxide film 16 is formed along concaves and convexes in a three-dimensional shape formed at the surface of the base material 2, and therefore, a thermal stress (tensile stress) generated in accordance with a difference in thermal expansion coefficients with the base material 2 being the aluminum alloy caused by a temperature rise is dispersed, and convergence of the stress on a certain portion can be reduced. Accordingly, frequency of occurrence of cracks can be largely reduced at the anodic oxide film 16.

Note that when there is a silver plating surface or the like to form electrodes and so on in advance at the surface of the base material 2 being the aluminum alloy and so on, it is not necessary to perform the anodic oxidation process. Accordingly, it is necessary to perform a masking on the silver plating surface when the anodic oxidation process is performed. A material of which corrosion for an acidic electrolytic solution is small is necessary to be used as a fixture for the masking, and it is desirable to use titanium being a metal excellent in corrosion resistance as the material as stated above.

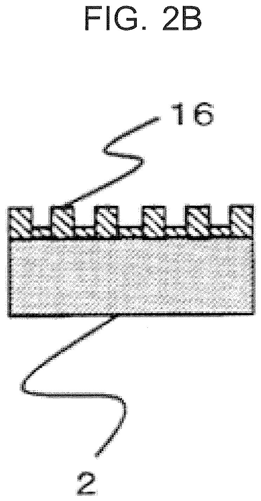

Next, as illustrated in FIG. 2B, the aluminum alloy material in which the above-stated preprocessing is performed is electrolyzed in an electrolytic solution, and thereby, the anodic oxide film 16 is formed on the surface of the base material 2. The diameter of the minute hole 3 of the anodic oxide film 16 and the thickness of the anodic oxide film 16 can be controlled by a kind, a concentration of an acidic electrolytic solution, an electrolytic condition, and so on. Accordingly, publicly known methods can be applied if each of the above-stated conditions can be controlled according to need.

Here, the acidic electrolytic solution contains at least one kind among phosphoric acid, sulfuric acid, oxalic acid, chromic acid, and so on. The concentration of the acidic electrolytic solution is prepared to be 0.2 mol/L to 10 mol/L, preferable to be 1 mol/L to 5 mol/L. In general, pure water may be used as a solvent. A temperature of the acidic electrolytic solution is preferable to be within a range of 5°C to 30°C. A process time in the acidic electrolytic solution is for approximately 5 minutes to 60 minutes. An anodic oxidation voltage may be appropriately set in accordance with the diameter of the minute hole 3 of the anodic oxide film 16, and it may generally be within a range of 5 V or more, preferable to be 5 V to 80 V. Note that a relationship among the thickness of the formed anodic oxide film 16, the diameter of the minute hole 3, the temperature of the solution, the process time and the voltage is desirable to be verified in advance by experiments and so on.

The thickness of the anodic oxide film 16 is desirable to be thicker than 0.5 µm and 2.0 µm or less. When the thickness is 0.5 µm or less, a later-described primer 14 (epoxy adhesive) is not enough filled into the minute hole 3, and the required adhesive force with the cast resin and a creep property at high-temperature at a bonding interface cannot be obtained. Besides, when the thickness is 2.0 µm or more, the primer 14 (epoxy adhesive) is not filled to a bottom portion of the minute hole 3, and an integration between the anodic oxide film 16 and the primer 14 is not completely attained, and therefore, a possibility in which the cracks occur at the anodic oxide film 16 at a cast time becomes large.

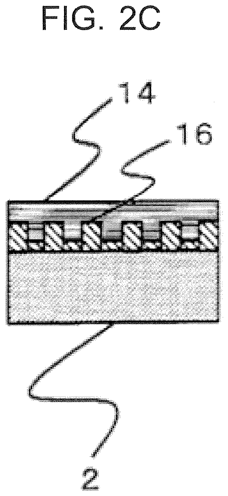

Next, as illustrated in FIG. 2C, the primer 14 (epoxy adhesive) is formed on the anodic oxide film 16. The primer 14 makes the anodic oxide film 16 formed on the base material 2 being the aluminum alloy adhere to the epoxy resin being the cast resin material.

The thermal expansion coefficient of the anodic oxide film 16 is approximately a fifth part relative to the thermal expansion coefficient of the aluminum alloy being the base material 2, and therefore, the thermal stress (tensile stress) occurs at the interface in accordance with the difference in the thermal expansion coefficients when it exceeds a predetermined temperature. Accordingly, the frequency when the cracks occur at the anodic oxide film 16 becomes large as the thickness of the anodic oxide film 16 becomes thick. The primer 14 (epoxy adhesive) having a certain molecular structure is therefore coated on the anodic oxide film 16 so as to suppress that the cracks occur at the anodic oxide film 16. The primer 14 permeates (fills) into an inside of the minute hole 3 and the branch minute holes 7 of the anodic oxide film 16 and they are integrated, and therefore, it is possible to prevent that the cracks occur at the anodic oxide film 16.

The primer 14 to be used is made up of a main ingredient composed of an epoxy compound having at least two or more epoxy groups in one molecule, and a material constituted by a curing agent having a resole-type phenol resin added to the main ingredient.

Generally, a bisphenol-type epoxy resin such as commercially available Epicoat 825 (brand name: Japan Epoxy Resin Co., Ltd.), Epicoat 827 (brand name: Japan Epoxy Resin Co., Ltd.), Epicoat 828 (brand name: Japan Epoxy Resin Co., Ltd.) and Epicoat 807 (brand name: Japan Epoxy Resin Co., Ltd.) can be used as the main ingredient composed of the epoxy compound.

In addition, at least one kind of a bifunctional biphenyl-type epoxy resin or a bifunctional naphthalene-type epoxy resin can be cited as the epoxy resin used as the main ingredient, and they can be used independently or by mixing. It is preferable to use generally commercially available YX-4000 (brand name: Japan Epoxy Resin Co., Ltd.), YX-4000H (brand name: Japan Epoxy Resin Co., Ltd.) as the bifunctional biphenyl-type epoxy resin, and generally commercially available EX1514 (brand name: manufactured by DIC corporation) and so on as the bifunctional naphthalene-type epoxy resin because adhesive heat resistance can be enough enhanced.

The resole-type phenol resin added to the main ingredient is a co-condensate obtained by phenol, cresol and formalin, and it works as a curing agent for the epoxy component. An addition amount of the curing agent having the resole-type phenol resin is preferable to be 0.7 equivalent or more and 1.0 equivalent or less relative to the main ingredient. When the addition amount is less than 0.7 equivalent, the primer 14 is not enough cured and the adhesion strength with the anodic oxide film 16 of the aluminum alloy being the base material 2 is lowered. On the other hand, when the addition amount exceeds 1.0 equivalent, the phenol resin precipitates and becomes uneven, and therefore, the adhesive strength is lowered.

Besides, in the present embodiment, a stress release agent may be further added to the primer 14 to release an internal stress of the primer 14 (epoxy adhesive) in itself. The stress release agent is polyvinyl butyral. Polyvinyl butyral is a resin compounded by reacting polyvinyl butyl alcohol under acid catalyst with butylaldehyde, and functions as a flexibility imparting agent. An addition amount of polyvinyl butyral is preferable to be set at 20 weight part or less relative to 100 weight part of the epoxy adhesive (main ingredient + curing agent) to bring out an effect as the flexibility imparting agent at the maximum. An effect to prevent the crack occurrence at the anodic oxide film 16 becomes large in proportion to the addition amount of polyvinyl butyral, but when the addition amount exceeds 20 weight part, solubility of polyvinyl butyral to the primer 14 is lowered.

Further, in the present embodiment, it is desirable that the primer 14 is diluted with a solvent containing acetone before the primer 14 is coated on the anodic oxide film 16. The thickness of a layer of the coated primer 14 and permeability (filling performance) of the primer 14 permeating into inside of the minute hole 3 and the branch minute holes 7 of the anodic oxide film 16 largely affect on the heat-resistance creep property, moisture resistance, and the adhesive strength at the adhesive interface between the aluminum alloy being the base material 2 and the epoxy resin being an insulating resin. Accordingly, a dilution magnification is changed by using the acetone solvent, and thereby, it is possible to comparatively easily and accurately control the thickness of the layer of the primer 14 to be coated, and to make the primer 14 easily permeate (fill) into the minute hole 3 and the branch minute holes 7 of the anodic oxide film 16. It is not particularly defined as for an operation coating the primer 14 on the anodic oxide film 16, but it may be coated by using a general brush and so on.

Note that in the present embodiment, it is necessary that the primer 14 is filled into the minute hole 3 and the branch minute holes 7 of the anodic oxide film 16 as stated above, but it is enough if it exists thinly on the surface (upper surface) of the anodic oxide film 16. Accordingly, a layer thickness of the primer 14, namely, the thickness of only the primer 14 formed on the surface (upper surface) of the anodic oxide film 16 is enough if it is approximately 1 µm, and it is approximately 40 µm at the maximum. If the thickness of the layer of the primer 14 is too thick, a required strength is not obtained, and it is not preferable. This is because the strength (adhesive force) at the interface between the cast resin and the base material 2 such as the aluminum alloy is divided not only by a layer in which the primer 14 and the anodic oxide film 16 are integrated but also by the layer made up of only the primer 14.

After coating the primer 14 (epoxy adhesive), drying and curing of the epoxy resin being a main constituent of the primer 14 are advantaged at high-temperature (120°C). The anodic oxide film 16 and the layer of the primer 14 (epoxy adhesive) are thereby integrated as illustrated in FIG. 2C.

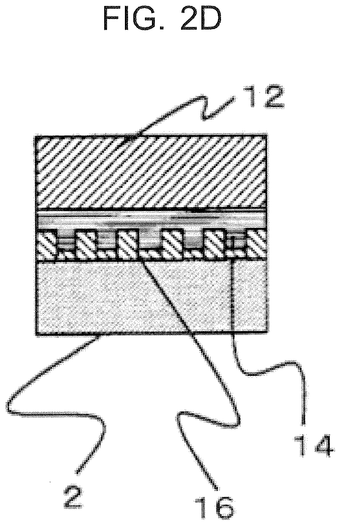

After that, as illustrated in FIG. 2D, a generally performed casting operation is performed, and an epoxy resin 12 (cast resin) is cast. The base material 2 being the aluminum alloy and the epoxy resin 12 (cast resin) are thereby firmly adhered, and an electrical insulating cast article is formed.

### (First Embodiment)

In the present embodiment, the above-stated bonding method by using the epoxy adhesive (primer 14) is concretely applied, and butt adhesive test pieces (hereinafter, referred to as "test pieces") imitating the electrical insulating cast article are manufactured. After that, various tests are performed for the test pieces. Here, the adhesive strength (mechanical strength) at the bonding interface between the metal part and the cast resin (epoxy resin 12) of the electrical insulating cast article, and the high-temperature creep property at the adhesive interface are measured. An adhesive heat resistance at the bonding interface between the metal part and the cast resin (epoxy resin 12) and an optimum thickness of the anodic oxide film are evaluated based on the measurement results.

### (Examples 1 to 3)

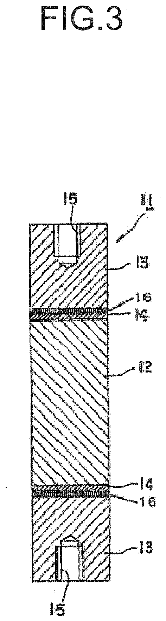

FIG. 3 is a view illustrating a summary of the test piece. As illustrated in FIG. 3, in a test piece 11, two pieces of aluminum alloy parts 13, 13 are bonded to face at both ends of the epoxy resin 12 (cast resin) for casting. The primer 14 (epoxy adhesive) and the anodic oxide film 16 according to the present embodiment exist between each of the two metal parts 13, 13 and the epoxy resin 12 (cast resin). Note that in FIG. 3, reference numerals 15 are female screw portions to mount the test piece 11 at a testing machine (not-illustrated).

The above-stated test piece 11 is manufactured by the process described below.

At first, a JIS6000 series alloy (A6061) round bar (φ20) of Al-Mg-Si series is prepared as the aluminum alloy part 13. Here, an adhesive surface of the aluminum alloy part 13 to be adhered to the epoxy resin 12 is sand blast processed and prepared to be a surface roughness Ra of approximately 5 µm to 10 µm. Next, this aluminum alloy part 13 is immersed in a degreasing liquid (gamma butyrolactone) at 50°C containing a surface active agent at 2% for 60 seconds, and thereafter, it is water-washed for 30 seconds.

Next, the aluminum alloy part 13 is etched at 50°C for 30 seconds by using a sodium hydroxide solution at 10%, and thereafter, it is water-washed for 30 seconds. Subsequently, the aluminum alloy part 13 is washed for 30 seconds by using a nitric acid solution at 10%, and thereafter, it is water-washed for 30 seconds for a desmutting treatment. Next, an electrolysis process is performed while setting the aluminum alloy part 13 as anode by using a phosphoric acid solution as an electrolytic solution. The electrolysis process is performed while appropriately adjusting respective values to be within a range in which a phosphoric acid concentration in the electrolytic solution is 20% by weight, an electrolytic bath temperature is 15°C to 25°C, a bath voltage is 20 V to 80 V, a current density is 2 A/cm² to 4 A/cm², and an electrolysis time is 10 minutes to 30 minutes. The test pieces 11 in which the anodic oxide films 16 of which average thicknesses are 0.8 µm (example 1), 1.2 µm (example 2), 2.0 µm (example 3) are each formed are thereby obtained.

Next, a primer liquid is prepared as described below to form the primer 14 (epoxy adhesive). Specifically, a resinous substance in the primer is adjusted by adding the curing agent of the resole-type phenol resin for 0.9 equivalent for the main ingredient of YX4000 (brand name: manufactured by Yuka-Shell Epoxy Co., Ltd.) being the bifunctional biphenyl-type epoxy resin for 35 g, and Epicoat 828 (brand name: manufactured by Yuka-Shell Epoxy Co., Ltd.) for 65 g being the bisphenol-type epoxy resin, and it is diluted by acetone to be the primer liquid. A dilution rate of acetone is set to be 600 phr (Per Hundred Resin: weight part) relative to 100 phr of the primer resin. The primer liquid is coated on the surface of the aluminum alloy part 13 which is to be adhered to the epoxy resin 12 at the room temperature, and it is cured under a condition at 120°C for two hours, and thereby, the layer of the primer 14 with a predetermined thickness is formed.

Next, the epoxy resin 12 (cast resin) is formed. Here, at first, a composition of the epoxy resin 12 is adjusted in advance to contain Epicoat 828 (epoxy equivalent 190) (brand name: manufactured by Japan Epoxy) being a bisphenol A-type epoxy resin for 80 weight part, Araldite CT179 (brand name: manufactured by Huntzman Co., Ltd.) being an alicyclic epoxy resin for 20 weight part, HN5500 (methylhexahydrophthalic anhydride) (brand name: manufactured by Hitachi Chemical Co., Ltd.) being an acid anhydride curing agent for 90 weight part, Nissan Cation M2-100 (brand name: manufactured by NOF Corporation) being quaternary ammonium salt for 0.9 weight part as an accelerator, and a Granular Alumina (manufactured by Showa Denko K. K.) of which average particle diameter is 12 µm for 420 weight part. A curing process is then performed in a metal mold. A primary curing condition in the metal mold is at 130°C for 1.5 hours, a secondary curing condition is at 160°C for 15 hours. A glass transition temperature Tg of the epoxy resin 12 after the secondary curing is Tg = 155°C as a result measured by a DSC (differential scanning calorimeter) method.

### (Comparative Examples 1 to 3)

In comparative examples 1 to 3, the JIS6000 series alloy (A6061) round bar (φ20) of Al-Mg-Si series which is the same as the examples 1 to 3 is used as the aluminum alloy part 13. The adhesive surface of the aluminum alloy part 13 to be adhered to the epoxy resin 12 is sand blast processed and prepared to be the same surface roughness Ra as the examples 1 to 3. Besides, all of the decreasing, the alkaline wash, the desmutting treatment are performed under the same conditions as the examples 1 to 3.

Next, the electrolysis process is performed while setting the aluminum alloy part 13 as anode by using the phosphoric acid solution as the electrolytic solution. Here, respective conditions of the phosphoric acid concentration in the electrolytic solution, the electrolytic bath temperature, the bath voltage and the current density are within the same ranges as the examples 1 to 3. However, the electrolysis time is different from the examples 1 to 3, and it is appropriately adjudged within a range of 5 minutes to 40 minutes. The anodic oxide films 16 are thereby formed such that the average thicknesses are 0.5 µm (comparative example 1), 3.0 µm (comparative example 2), and 4.0 µm (comparative example 3). The other conditions are the similar conditions as the examples 1 to 3 to manufacture the test pieces 11.

### (Comparative Example 4)

In a comparative example 4, the test piece 11 described below is prepared to compare with the FPL etching method known as a representative method enlarging the adhesive force with the epoxy resin.

Specifically, the JIS6000 series alloy (A6061) round bar (φ20) of Al-Mg-Si series is used as the material of the aluminum alloy part 13 in the comparative example 4. The adhesive surface of the aluminum alloy part 13 to be adhered to the epoxy resin 12 is sand blast processed and prepared to be the similar surface roughness Ra as the examples 1 to 3. Next, this aluminum alloy part 13 is immersed in the degreasing liquid (gamma butyrolactone) at 50°C containing the surface active agent at 2% for 60 seconds, and thereafter, it is water-washed for 30 seconds. Next, the aluminum alloy part 13 is etched at 50°C for 30 seconds by using the sodium hydroxide solution at 10%, and thereafter, it is water-washed for 30 seconds. Next, the aluminum alloy part 13 is washed at 65°C for 30 seconds by using the nitric acid solution at 10%, and thereafter, it is water-washed for 30 seconds. Next, an FPL etching is performed at 65°C for 5 minutes by using a nitric acid/dichromic acid solution in which the nitric acid, the dicromic acid, and water have a composition of 10: 2: 30 in a weight ratio. The test piece 11 is manufactured while setting the other conditions to be the same as the examples 1 to 3.

### (Test Results and Evaluation)

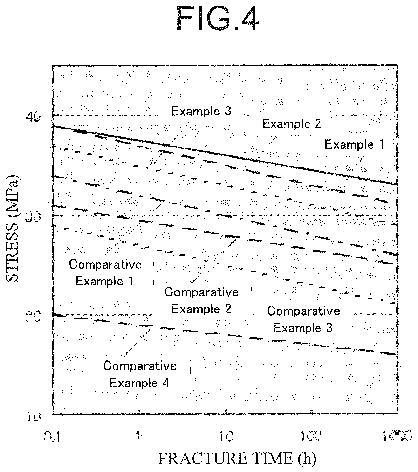

FIG. 4 is a view representing a result in which a high-temperature creep test at 115°C is performed for the above-stated respective test pieces 11 (Examples 1 to 3, Comparative Examples 1 to 4). As represented in FIG. 4, stress values of the example 1 to 3 represent higher values than the comparative examples 1 to 4 in any of fracture times when the results at the same fracture time are compared.

The adhesive layer (primer 14) at a side which is not fractured after the high-temperature creep test is observed in detail by using a scanning electron microscope as for all of the test pieces.

As a result, when the average thicknesses of the anodic oxide films 16 are 0.8 µm (example 1), 1.2 µm (example 2) and 2 µm (example 3), it is verified that the primer 14 impregnates into the minute hole 3 of the anodic oxide film 16 and reaches up to the barrier layer 5 having the firm mechanical strength. Further, it is also verified that there is no defect at the adhesive interface made up of the anodic oxide film 16 and the primer 14.

On the other hand, when the average thickness of the anodic oxide film 16 is 0.5 µm (comparative example 1), the integration between the primer 14 and the anodic oxide film 16 becomes incomplete because the thickness of the anodic oxide film 16 is too thin, and the cracks occur in a vicinity of the interface between both. In the comparative example 1, it is verified by the observation using the scanning electron microscope in which this crack becomes a starting point, and the heat-resistance creep property at the adhesive interface is lowered.

When the average thicknesses of the anodic oxide films 16 are 3.0 µm (comparative example 2), 4.0 µm (comparative example 3), the high-temperature creep property more excellent than the FPL etching method (comparative example 4) being the conventional method can be obtained. However, in the comparative example 2 and the comparative example 3 compared to the examples 1 to 3, the permeation (filling) of the primer 14 into the minute hole 3 of the anodic oxide film 16 is insufficient, and therefore, the cracks occur from the anodic oxide film 16 at an area where the primer 14 does not reach. In the comparative example 2 and the comparative example 3, it turns out from the observation of the scanning electron microscope in which the crack becomes the starting point and the high-temperature creep property at the adhesive interface is lowered.

Note that in later-described Table 1, results of tensile strengths at the room temperature of the examples 1 to 3 and the comparative examples 1 to 4 are represented. As represented in Table 1, the strengths at approximately 60 MPa are obtained in the examples 1 to 3. In the comparative example 4 using the FPL etching method being the conventional method, the strength stays at around 54 MPa. In the comparative examples 1 to 3 in which the same anodic oxidation method as the examples 1 to 3 is used, the strengths at the same degree as the examples can be obtained except the comparative example 1 of which film thickness is thin.

As stated above, in the electrical insulating cast article according to the first embodiment, the strength at the adhesive interface between the aluminum alloy member 13 (base material 2) and the cast epoxy resin (cast resin 12) used to embed the part is enough large. Besides, in the present embodiment, the occurrences of cracks are effectively suppressed and the creep property at high-temperature is also fine even if it is exposed to the high temperature at around 160°C in the manufacturing process (casting time) because the anodic oxide film 16 formed at the aluminum alloy member 13 is integrated with the primer 14.

### (Second Embodiment)

In the present embodiment, the adhesive method using the primer 14 (epoxy adhesive) according to the above-stated embodiment is applied for the aluminum alloy part 13 after the anodic oxide film 16 is manufactured and retained for a predetermined time. The butt adhesive test pieces 11 (hereinafter, referred to as the "test pieces 11") which are the same as the first embodiment are manufactured, and various test are performed for the test pieces 11.

Here, the adhesive strength (mechanical strength) at the room temperature and the adhesive strength (mechanical strength) at high-temperature (115°C) at the bonding interface between the metal part 13 and the resin (cast resin 12) of the electrical insulating cast article are measured. Presence/absence of variation per hour of the anodic oxide film 16 and validity of a case when the adhesive method according to the present embodiment is applied under the conditions as stated above are evaluated based on the measurement results.

Note that in the present embodiment, the thickness of the anodic oxide film 16 is set to be the same average thickness of 1.2 µm as the example 2 in which the strength represents the highest value at the high-temperature creep test in the first embodiment.

### (Examples 4 to 6)

In each of examples 4 to 6, the average thickness of the anodic oxide film 16 of the aluminum alloy part 13 is prepared to be 1.2 µm by the similar method as the example 2. After that, they are each retained for three days (example 4), seven days (example 5) and 30 days (example 6) in a desiccator at the room temperature, with a humidity of 45%, and thereafter, the coating and drying of the primer 14 (hereinafter, referred to as a "primer process") are performed. The test pieces 11 are obtained by the similar process as the example 2 as for the other conditions.

### (Comparative Examples 5 to 6)

In comparative examples 5, 6, the aluminum alloy part 13 is FPL etched by the similar method as the comparative example 4 in the first embodiment. After the FPL etching, the primer process is performed after they are each kept for three days (comparative example 5), seven days (comparative example 6) in the desiccator at the room temperature, with the humidity of 45%. The test pieces 11 are obtained by the similar process as the comparative example 4 as for the other conditions.

### (Test Results and Evaluation)

Table 2 represents a result of the tensile strength at the room temperature and at the high-temperature (115°C) after each time lapsed.

As represented in Table 2, the tensile strengths at the room temperature scarcely change even if the primer process is performed after the time lapsed (three days, seven days, 30 days) in the examples 4 to 6. Further, the tensile strengths at the high-temperature (115°C) are at around 50 MPa though a slight deterioration can be seen in each case compared to the case of the room temperature. Accordingly, it can be verified that the deterioration of the adhesive strength is not seen as long as the primer process is performed after each of the retention periods for the above-stated degree.

On the other hand, in the comparative examples 5 to 6, the tensile strengths at the room temperature after three days (comparative example 5), seven days (comparative example 6) largely deteriorate (when the tensile strength after three days is 100%, the tensile strength after seven days is 73%) as represented in Table 2. Further, the tensile strengths at the high-temperature (115°C) are each at 29 MPa deteriorating for 56% in the comparative example 5, and at 20 MPa deteriorating for 52% in the comparative example 6 when they are compared to respective values at the room temperature. In addition, the tensile strength at the high-temperature becomes from 29 MPa after three days to 20 MPa after seven days, and it deteriorates for 69%.

As stated above, the electric insulating cast article according to the present embodiment has the high-temperature creep property excellent for a long time even if the primer process is performed after the anodic oxidation process performed for the aluminum alloy part 13 is retained for a long time (30 days) by applying the bonding method using the above-described primer 14 (epoxy adhesive). Besides, it is possible to prevent that the adhesive force between the aluminum alloy part and the epoxy resin deteriorates in the electric insulating cast article according to the present embodiment.

**[Table 1]**

| | Oxide film creation method | Average thickness of film(µm) | Epoxy adhesive (primer) | Tensile strength (room temperature) |
|---|---|---|---|---|
| E1 | Anodic | | | |
| | oxidation method | 0.8 | YX4000+Epicoat828 | 61 |
| E2 | Anodic oxidation method | 1.2 | YX4000+Epicoat828 | 62 |
| E3 | Anodic oxidation method | 2.0 | YX4000+Epicoat828 | 60 |
| E4 | Anodic oxidation method | 1.2 | YX4000+Epicoat828 | 60 |
| E5 | Anodic oxidation method | 1.2 | YX4000+Epicoat828 | 62 |
| E6 | Anodic oxidation method | 1.25 | YX4000+Epicoat828 | 62 |
| CE1 | Anodic oxidation method | 0.5 | YX4000+Epicoat828 | 58 |
| CE2 | Anodic oxidation method | 3.0 | YX4000+Epicoat828 | 62 |
| CE3 | Anodic oxidation method | 4.0 | YX4000+Epicoat828 | 60 |
| CE4 | EPL etching method | 50(nm) | YX4000+Epicoat828 | 54 |
| CE5 | EPL etching method | 50(nm) | YX4000+Epicoat828 | 53 |
| CE6 | EPL etching method | 50(nm) | YX4000+Epicoat828 | 55 |

| | | | | |
|---|---|---|---|---|
| E1 to E6= Example 1 to Example 6: CE1 to CE6= Comparative Example 1 to Comparative Example 6 | | | | |

**[Table 2]**

| | Retention period of aluminum alloy parts | Tensile strength (MPa) | |
|---|---|---|---|
| | | Strength at room temperature | Strength at 115°C |
| Example 4 | 3 | 59 | 49 |
| Example 5 | 7 | 62 | 50 |
| Example 6 | 30 | 61 | 51 |
| Comparative Example 5 | 3 | 52 | 29 |
| Comparative Example 6 | 7 | 38 | 20 |

### (Third Embodiment)

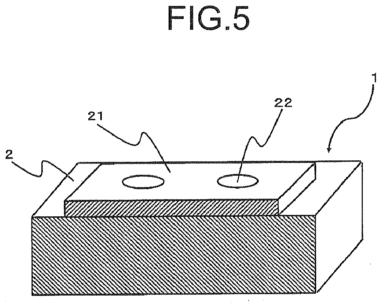

FIG. 5 is a view schematically explaining a fixture for masking to prevent that the anodic oxide film 16 is formed at a portion where a process such as, for example, silver plating is performed in advance to dispose an electrode and so on at the surface of the aluminum alloy member 13 at the anodic oxidation process time.

The above-stated plating surface is required to have good conductivity because it is a conductive surface of, for example, a gas insulated switchgear (GIS) and a preprocess surface for an electrode connection. Accordingly, it is necessary to avoid that the anodic oxide film 16 to be an electrical resistance is formed at the plating surface. It is therefore necessary to use a masking fixture as illustrated in FIG. 5 when the anodic oxidation process of the electrical insulating cast article is performed.

The masking fixture includes a making plate 21 covering the plating surface and so on, and volts 22 to fix the masking plate 21 at the surface of the base material 2 of an aluminum alloy member 1. It is the most preferable that the masking plate 21 is made of titanium. Titanium is a material difficult to process and being expensive, but it is not corroded even if the anodic oxidation process is performed, capable of being used repeatedly, and can be used semi-permanently if there is not any external damage. The volt 22 is desirable to be made of titanium from the similar reason as the masking plate 21. Note that it is possible to use the volt placed at the portion to be masked as the electrode because there is a case when it is difficult to locate the electrode at the anodic oxidation process time depending on a shape of the aluminum alloy member.

While certain embodiments have been described, these embodiments have been presented by way of example.

## Claims

1. An electrical insulating cast article, comprising:
a base material formed by an aluminum alloy or pure aluminum;
a cast resin;
an anodic oxide film formed at a surface of the base material; and
an adhesive provided between the base material and the cast resin and making the surface where the anodic oxide film is formed adhere to the cast resin at the base material,
wherein the anodic oxide film is made up of plural prismatic cells;
wherein a hole extending in a depth direction and opening at a surface of the prismatic cell is formed approximately in a vicinity of a center of the prismatic cell, and branch holes extending in approximately a vertical direction relative to an inner peripheral surface are further formed at the inner peripheral surface of the hole;
wherein a thickness of the anodic oxide film is thicker than 0.5 µm and less than 2.0 µm; and
wherein the adhesive is filled into each hole of the prismatic cell and of which thickness is 1 µm or more and 40 µm or less,
wherein the adhesive is made up of a main ingredient composed of an epoxy compound having at least two or more epoxy groups in one molecule, and a curing agent having a resole-type phenol resin added to the main ingredient, and
wherein the main ingredient is at least one kind among a bifunctional bisphenol-type epoxy resin, a bifunctional biphenyl-type epoxy resin or a bifunctional naphthalene-type epoxy resin.

2. The electrical insulating cast article according to claim 2,
wherein the anodic oxide film is formed by a phosphoric acid anodic oxidation process.

3. A manufacturing method of an electrical insulating cast article according to claim 1 comprising:
performing a degreasing treatment of a surface of a base material formed by an aluminum alloy or pure aluminum;
performing a desmutting treatment of the degreasing treated surface at the base material;
making the desmutting treated surface into concave and convex state by performing a sand blast process at the base material;
forming an anodic oxide film by performing an anodic oxidation process of the surface made into concave and convex state at the base material;
coating an adhesive on the surface of the base material to fill the adhesive into holes of the anodic oxide film; and
casting an epoxy resin at the surface of the base material where the adhesive is coated.

4. The manufacturing method of the electrical insulating cast article according to claim 3, further comprising
diluting the adhesive with a solvent containing acetone before the coating the adhesive.

5. The manufacturing method of the electrical insulating cast article according to claim 3,
wherein a preprocess is performed by using caustic soda and a neutralization process is performed by using nitric acid in the desmutting treatment.

6. The manufacturing method of the electrical insulating cast article according to claim 3, further comprising:
performing a masking in which a titanium masking plate is provided at a portion where an anodic oxide film is not formed at the surface of the base material before the anodic oxidation process.

## Patentansprüche

1. Elektrisch isolierender Gussgegenstand, umfassend:
ein Basismaterial, das aus einer Aluminiumlegierung oder reinem Aluminium gebildet ist;
ein Gießharz;
einen anodischen Oxidfilm, der auf einer Oberfläche des Basismaterials gebildet ist; und
einen Klebstoff, der zwischen dem Basismaterial und dem Gießharz angeordnet ist und bewirkt, dass die Oberfläche, auf der der anodische Oxidfilm gebildet ist, an dem Gießharz und dem Basismaterial anhaftet,
wobei der anodische Oxidfilm aus einer Vielzahl von prismatischen Zellen aufgebaut ist;
wobei ein Loch, das sich in eine Tiefenrichtung erstreckt und sich an einer Oberfläche der prismatischen Zelle öffnet, etwa in Nachbarschaft zum Mittelpunkt der prismatischen Zelle gebildet ist und Zweiglöcher, die sich etwa in vertikaler Richtung relativ zur inneren Umfangsoberfläche erstrecken, zusätzlich in der inneren Umfangsoberfläche des Loches gebildet sind;
wobei die Dicke des anodischen Oxidfilms dicker als 0,5 µm und dünner als 2,0 *µ*m ist; und
wobei der Klebstoff in jedes Loch der prismatischen Zelle gefüllt ist und dessen Dicke 1 *µ*m oder mehr und 40 *µ*m oder weniger ist;
wobei der Klebstoff aus einem Hauptbestandteil, der aus einer Epoxyverbindung mit mindestens zwei oder mehr Epoxygruppen in einem Molekül gebildet ist, und einem Härtungsmittel mit einem Resol-Typ-Harz, das zum Hauptbestandteil hinzugefügt ist, zusammengesetzt ist
und
wobei der Hauptbestandteil mindestens einer aus einem bifunktionalen Bisphenol-Typ-Epoxidharz, einem bifunktionalen Biphenyl-Typ-Epoxidharz oder einem bifunktionalen Naphthalen-Typ-Epoxidharz ist.

2. Elektrisch isolierender Gussgegenstand gemäß Anspruch 2 wobei der anodische Oxidfilm durch einen anodischen Oxidationsprozess mit Phosphorsäure gebildet wird.

3. Herstellungsverfahren für ein elektrisch isolierenden Gussgegenstand gemäß Anspruch 1, umfassend:
das Durchführen einer Entfettungsbehandlung einer Oberfläche eines Basismaterials, das aus einer Aluminiumlegierung oder reinem Aluminium gebildet ist;
das Durchführen einer Reinigungsbehandlung der entfettungsbehandelten Oberfläche auf dem Basismaterials;
das Überführen der reinigungsbehandelten Oberfläche in eine konkave und konvexe Form, indem ein Sandstrahlverfahren auf dem Basismaterial durchgeführt wird;
das Bilden eines anodischen Oxidfilms, indem ein anodisches Oxidationsverfahren der Oberfläche, die in eine konkave und konvexe Form auf der Oberfläche des Basismaterials überführt wurde, durchgeführt wird;
das Auftragen eines Klebstoffes auf die Oberfläche des Basismaterials, um den Klebstoff in die Löcher des anodischen Oxidfilms zu füllen; und
das Gießen eines Epoxidharzes auf die Oberfläche des Basismaterials, auf welcher der Klebstoff geschichtet ist.

4. Herstellungsverfahren für ein elektrisch isolierendes Gussgegenstand gemäß Anspruch 3, das zusätzlich das Verdünnen des Klebstoffes mit einem Lösungsmittel, das Aceton enthält, vor dem Auftragen des Klebstoffes umfasst.

5. Herstellungsverfahren für ein elektrisch isolierendes Gussgegenstand gemäß Anspruch 3, bei dem ein Vorverfahren unter Verwendung von Ätznatron durchgeführt wird und ein Neutralisationsverfahren unter Verwendung von Salpetersäure bei der Reinigungsbehandlung durchgeführt wird.

6. Herstellungsverfahren für ein elektrisch isolierendes Gussgegenstand gemäß Anspruch 3, zusätzlich umfassend:
Durchführen einer Maskierung, bei der eine Titan-Maskierungsplatte auf einem Bereich angeordnet wird, auf dem kein anodischer Oxidfilm auf der Oberfläche des Basismaterials gebildet ist, vor dem anodischen Oxidationsverfahren.

## Revendications

1. Article coulé isolant électrique, comprenant :
un matériau de base formé par un alliage d'aluminium ou d'aluminium pur ;
une résine de coulée ;
un film d'oxyde anodique formé au niveau d'une surface du matériau de base ; et
un adhésif ménagé entre le matériau de base et la résine de coulée et faisant en sorte que la surface où le film d'oxyde anodique est formé adhère à la résine de coulée au niveau du matériau de base,
dans lequel le film d'oxyde anodique est constitué de plusieurs cellules prismatiques ;
dans lequel un orifice s'étendant dans une direction de profondeur et s'ouvrant au niveau d'une surface de la cellule prismatique est formé approximativement au voisinage d'un centre de la cellule prismatique, et des orifices de branchement s'étendant approximativement dans une direction verticale par rapport à une surface périphérique interne sont en outre formés au niveau de la surface périphérique interne de l'orifice ;
dans lequel une épaisseur du film d'oxyde anodique est supérieure à 0,5 µm et inférieure à 2,0 µm ; et
dans lequel l'adhésif est rempli dans chaque orifice de la cellule prismatique et dont l'épaisseur est égale ou supérieure à 1 µm ou égale ou inférieure à 40 µm,
dans lequel l'adhésif est constitué d'un ingrédient principal constitué d'un composé époxy ayant au moins deux groupes époxy ou plus dans une molécule, et un agent de durcissement ayant une résine phénolique de type résole ajoutée à l'ingrédient principal, et
dans lequel l'ingrédient principal est au moins un type parmi une résine époxy de type bisphénol bifonctionnelle, une résine époxy biphénylique bifonctionnelle ou une résine époxy de type naphtalène bifonctionnelle.

2. Article coulé isolant électrique selon la revendication 2,
dans lequel le film d'oxyde anodique est formé par un procédé d'oxydation anodique à l'acide phosphorique.

3. Procédé de fabrication d'un article coulé isolant électrique selon la revendication 1, comprenant :
effectuer un traitement de dégraissage d'une surface d'un matériau de base formé par un alliage d'aluminium ou d'aluminium pur;
effectuer un traitement de décapage de la surface traitée dégraissée du matériau de base ;
amener la surface traitée décapée dans un état concave et convexe en effectuant un processus de grenaillage du matériau de base ;
former un film d'oxyde anodique en effectuant un processus d'oxydation anodique de la surface amenée dans un état concave et convexe au niveau du matériau de base ;
appliquer un adhésif en revêtement sur la surface du matériau de base pour que l'adhésif remplisse des orifices du film d'oxyde anodique ; et
couler une résine époxy à la surface du matériau de base où l'adhésif est appliqué en revêtement.

4. Procédé de fabrication de l'article coulé isolant électrique selon la revendication 3, comprenant en outre
diluer l'adhésif avec un solvant contenant de l'acétone avant l'application en revêtement de l'adhésif.

5. Procédé de fabrication de l'article en fonte isolante électrique selon la revendication 3,
dans lequel un prétraitement est effectué en utilisant de la soude caustique et un processus de neutralisation est effectué en utilisant de l'acide nitrique dans le traitement de décapage.

6. Procédé de fabrication de l'article coulé isolant électrique selon la revendication 3, comprenant en outre :
effectuer un masquage dans lequel une plaque de masquage en titane est ménagée dans une partie où un film d'oxyde anodique n'est pas formé à la surface du matériau de base avant le processus d'oxydation anodique.
